(19) Europäisches Patentamt / European Patent Office / Office européen des brevets

(11) **EP 4 047 329 B1**

(12) **EUROPÄISCHE PATENTSCHRIFT**

(45) Veröffentlichungstag und Bekanntmachung des Hinweises auf die Patenterteilung:
**24.07.2024   Patentblatt 2024/30**

(21) Anmeldenummer: **21158073.3**

(22) Anmeldetag: **19.02.2021**

(51) Internationale Patentklassifikation (IPC):
**G01G 11/00** *(2006.01)*      **G01G 23/01** *(2006.01)*

(52) Gemeinsame Patentklassifikation (CPC):
**G01G 11/003; G01G 23/01;** G01G 11/006;
G01G 23/012

(54) **VERFAHREN UND VORRICHTUNG ZUR ÜBERPRÜFUNG EINER WIEGEGENAUIGKEIT EINER, IN EINE FÖRDERSTRECKE INTEGRIERTE, WAAGE WÄHREND DES LAUFENDEN BETRIEBES**

METHOD AND DEVICE FOR CHECKING THE WEIGHING ACCURACY OF A SCALE INTEGRATED INTO A CONVEYOR TRACK DURING OPERATION

PROCÉDÉ ET DISPOSITIF DE VÉRIFICATION DE LA PRÉCISION DE PESAGE D'UNE BALANCE INTÉGRÉE DANS UNE SECTION DE TRANSPORT LORS DU FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.08.2022   Patentblatt 2022/34**

(73) Patentinhaber: **Primetals Technologies Austria GmbH**
**4031 Linz (AT)**

(72) Erfinder:
• **Hartl, Franz**
  **4720 Kallham (AT)**
• **Rohrhofer, Andreas**
  **4070 Eferding (AT)**

• **Kappacher-Winter, Yvonne**
  **4040 Linz (AT)**
• **Dirnberger, Wolfgang**
  **3362 Oehling (AT)**
• **Lehner, Manfred**
  **4040 Linz (AT)**
• **Ulrich, Daniel**
  **4040 Linz (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
DE-A1- 102012 017 717

EP 4 047 329 B1

## Beschreibung

Gebiet der Technik

Die vorliegende Erfindung betrifft das Gebiet von Waagen, welche in eine Förderstrecke integriert sind.

Die Erfindung betrifft ein Verfahren und eine Vorrichtung zur Überprüfung einer Wiegegenauigkeit einer Waage - welche ein Gewicht während eines kontinuierlichen Materialflusses bestimmt - während des laufenden Betriebes. Diese Waage ist innerhalb einer Förderstrecke angeordnet, bevorzugt ist dies eine Bandwaage oder eine Dosierbandwaage.

Die Erfindung umfasst des Weiteren ein Computerprogramm, welches das Verfahren ausführt.

Ein weiterer Gegenstand der Erfindung ist ein Computerlesbares Medium, welches das Computerprogramm speichert.

Stand der Technik

In Industrieanlagen wie beispielsweise in einer Anlage der Eisen- und Stahlerzeugung werden verschiedenste Rohstoffe wie beispielsweise Erz, Koks, Kalk, Dolomit und weitere benötigt. Für den Eisen- und Stahlerzeugungsprozess ist es erforderlich die zugegebenen Materialmengen und Materialverhältnisse genau zu kontrollieren und zu erfassen. Eine Genauigkeit der Erfassung hat großen Einfluss auf eine spätere Produktqualität. Weiters werden auch Produktionskosten damit beeinflusst.

Die Erfassung von zugegebenen Materialmengen - durch Erfassung der Masse - von Schüttgütern erfolgt speziell in kontinuierlichen Prozessen überwiegend mittels Dosierbandwaagen. Eine Dosierbandwaage ist ein spezielles Förderbandsystem, das über eine Sensorik zur Erfassung der Gewichtskräfte und Messung der Bandgeschwindigkeit verfügt. Des Weiteren verfügt eine Dosierbandwaage über einen eigenständigen Bandantrieb, der in seiner Geschwindigkeit regelbar ist.

Die Sensorik zur Erfassung der Gewichtskräfte wird überwiegend mittels einer oder mehrerer Wägezellen realisiert. Eine oder mehrere Förderbandrollen sind konstruktiv so angeordnet, dass die auf der Rolle einwirkende Gewichtskraft auf die Wägezelle wirkt. Ein an der Dosierbandwaage beförderte Massenstromes (t/h, kg/min) wird aus der Bandgeschwindigkeit und der gemessenen Gewichtskraft berechnet.

Materialanbackungen, klemmendes Stückgut, Verschleiß am Fördergurt oder fehlerhafte Gurtspannung können den Kraftfluss auf die Wägezelle stören. Durch diese Störungen wird das Messergebnis maßgeblich verfälscht. Fehlerhafte Materialzugaben in den Prozess führen in weiterer Folge zu einer negativen Beeinflussung der Produktqualität bzw. erhöhen oftmals auch die Produktionskosten.

Um dies zu vermeiden, müssen Dosierbandwaagen regelmäßig überprüft, und wenn notwendig instandgesetzt werden. Eine Durchführung solch eines Prüfvorganges nimmt üblicherweise viel Zeit in Anspruch. Die Dosierbandwaage muss für eine solche Prüfung aus der Produktion genommen werden. Das Material muss von der Dosierbandwaage entfernt und das Förderband gesäubert werden. Danach erfolgt die Durchführung der Prüfung, in welchem mehrere Ermittlungsschritte notwendig sind und mithilfe eines Prüfgewichtes wird während mehrerer Umdrehungen die Dosierbandwaage auf Korrektheit der Gewichtsermittlung überprüft. Erst wenn die Überprüfung abgeschlossen ist kann die Dosierbandwaage wieder den Betrieb aufnehmen und in der Produktion eingesetzt werden.

Eine Prüfung oder Diagnose der Dosierbandwaage ist aktuell nur manuell möglich, da Prüfgewichte angebracht und wieder demontiert werden müssen. Das Prüfgewicht, welches für die Durchführung des Prüfprozess notwendig ist, kann mit folgenden Methoden aufgelegt werden:

- Aufbringung von Eich- bzw. Prüfgewichten an speziellen Aufhängungen an der Dosierbandwaage per Hand
- Durch Umlegen eines Hebels wird ein in die Dosierbandwaage integriertes Prüfgewicht manuell aufgelegt.
- Aktivierung eines pneumatischen oder elektrischen Aktuators, welcher automatisch ein Prüfgewicht auf die Dosierbandwaage auflegt.

Alle oben beschriebenen Prüfvorgänge haben den Nachteil, dass diese eine Unterbrechung des normalen Betriebes also eine Außer-Betrieb-Setzung der Dosierbandwaage erfordern.

Eine frühzeitige Erkennung von fehlerhaften Messwerten minimiert das Risiko von Dosierfehlern und Qualitätseinschränkungen im Endprodukt. Eine automatisierte Prüfroutine, welche im Betrieb die Funktionsfähigkeit der Dosierbandwaage und dessen Wiegeeinrichtung überprüft, ist entsprechend dem aktuellen Stand der Technik nicht bekannt. In der DE 10 2012 017717 A1 ist ein Verfahren zur Kalibrierung einer Bandwaage gezeigt.

Zusammenfassung der Erfindung

Die Aufgabe der Erfindung ist es ein Verfahren zur Verfügung zu stellen, mit welchem die Wiegegenauigkeit einer Dosierbandwaage während des laufenden Betriebs ermittelt werden kann.

Die Aufgabe wird dadurch gelöst, dass eine stabile Betriebsart mittels einer Auswerteeinheit erkannt wird. Bei Erreichen einer stabilen Betriebsart wird durch die Auswerteeinheit ein Materialgewicht bestimmt und anschließend wird ein bekanntes Prüfgewicht auf die Dosierbandwaage aufgebracht. Die Auswerteeinheit bestimmt ein Summengewicht - aus Materialgewicht und Prüfgewicht. Im Anschluss bestimmt die Auswerteeinrichtung aus dem Summengewicht und dem Materialgewicht, ob die Wiegegenauigkeit der Dosierbandwaage in einem zulässigen Bereich liegt.

Der große Vorteil besteht darin, dass die Bestimmung der Wiegegenauigkeit im laufenden Betrieb stattfinden kann. Das Förderband muss nicht mehr aus der Produktion genommen, aufwändig leer gefahren und für den Test vorbereitet werden. Unter der Wiegegenauigkeit wird also verstanden, ob die Ermittlung des Gewichts innerhalb eines erlaubten Fehlerbereichs liegt.

In einem ersten Schritt wird eine stabile Betriebsart detektiert, in welcher das Gewicht des geförderten Materials $m_{Material}$ ermittelt wird.

Sobald sich ein Transportprozess, in welchem die Dosierwaage eingebunden ist, in einer stabilen Betriebsart befindet - der Messwert der Dosierbandwage $m_{Material}$ also keinen größeren Schwankungen unterliegt - wird ein ermittelter Gewichtswert des Materials gespeichert.

Typischer Weise spricht man von einer stabilen Betriebsart, wenn der Messwert für mehrere Umläufe oder einem definierten Zeitfenster - von beispielsweise zumindest 10 Sekunden bis zu mehreren Minuten - nur geringen Schwankungen unterliegt. Unter geringen Schwankungen werden Schwankungen des Gewichts beispielsweise in einem Bereich von 3% bis 5% verstanden.

Für das hier beschriebene Verfahren wird nun ein bekanntes Prüfgewicht - bevorzugt automatisch - auf die Dosierbandwaage aufgebracht. Dafür können bereits bestehende und dem Fachmann bekannte Mechanismen verwendet werden. Das Aufbringen von Prüfgewichten während des laufenden Betriebs ist möglich, da Dosierbandwaagen typischerweise bei 70-80% ihrer Nennlast betrieben werden. Das bedeutet, dass es möglich ist, zusätzliche Gewichte während des laufenden Betriebes aufzubringen und dieses ohne Fehler - welche durch betreiben der Dosierbandwaage oberhalb des zulässigen Bereichs zustande kommen - zu messen.

Das Aufgelegte Prüfgewicht $m_{Prüf}$ befinden sich typischer Weise im Bereich von 10-30% der Nennlast der Dosierbandwaage.

Ein wichtiges Merkmal der beschriebenen Erfindung ist, dass das Prüfgewicht während des Betriebs, also zusätzlich zum geförderten Material, aufgebracht wird. Dadurch kann ein neues Summengewicht aus dem Gewicht des transportierten Materials $m_{Material}$ und dem zusätzlichen Prüfgewicht $m_{Prüf}$ an der Dosierbandwaage gemessen werden.

Das gemessene Summengewicht setzt sich somit wie folgt - gemäß Gleichung 1 - zusammen:

$$m_{SumGew} = m_{Material} + m_{Prüf}$$
(Gleichung 1)

Befindet sich der Prozess auch in diesem Schritt wieder in einem stabilen Zustand. Dies ist dann der Fall, wenn das Summengewicht der Dosierbandwaage $m_{SumGew}$ für mehrere Umläufe des Förderbands oder einen vorgegebenen Zeitraum in einem vorgegebenen Schwankungsbereich verbleibt. Dann wird das ermittelte Summengewichts gespeichert.

Anschließend wird das Prüfgewicht wieder von der Dosierbandwaage abgehoben.

Durch den Vergleich der ermittelten Gewichte $m_{Material}$ und $m_{SumGew}$ kann das gemessene Prüfgewicht bestimmt werden.

$$m_{Prüf\_mess} = m_{sumGew} - m_{Material}$$
(Gleichung 2)

Wenn die Abweichung des gemessene Prüfgewicht innerhalb einer zulässigen Abweichung vom tatsächlichen Prüfgewichtes liegt, weist die Dossierbandwaage die nötige Wiegegenauigkeit auf. Wenn die Abweichung außerhalb dieses zulässigen Bereichs liegt ist eine Entsprechende Maßnahme einzuleiten.

In einer zweckmäßigen Ausführung wird an ein nachgelagertes Produktionssystem, während des laufenden Betriebes, immer nur das Materialgewicht übermittelt wird.

Sobald das Prüfgewicht auf die Dosierbandwaage aufgelegt wurde, kommt es zu einem veränderten Messwert. Der aufgelegte Gewichtswert des Prüfgewichts muss für die Übermittlung an ein Produktionssystem abgezogen werden, damit keine falschen Daten an ein Produktionssystem übermittelt werden.

Eine bevorzugte Ausführungsform sieht vor, dass das Prüfgewicht auf einen statischen Teil der Lasteinleitung der Dosierbandwaage aufgebracht wird.

Eine vorteilhafte Ausführungsform sieht vor, dass die stabile Betriebsart dann vorliegt, wenn sich in einer Zeitspanne von zumindest 10 Sekunden, bevorzugt zumindest 20 Sekunden, besonders bevorzugt zumindest 30 Sekunden, das Materialgewicht nur innerhalb eines vorgegebenen Toleranzbereiches verändert. Der Toleranzbereich ist vom jeweiligen Prozess abhängig, je nachdem wie stabile eine Aufbringung von Material auf das Förderband möglich ist.

Eine besonders vorteilhafte Ausführungsform sieht vor, dass das Summengewicht und das Materialgewicht aus einem Median oder einem Mittelwert von ermittelten Einzelgewichten während einer jeweils vorgegebenen Zeitspanne ermittelt wird. Es wird also eine Zeitspanne von 10 Sekunden, 20 Sekunden, 30 Sekunden, einer Minute oder mehreren Minuten vorgegeben und in dieser Zeitspanne werden alle Gewichtswerte der Dosierbandwaage erfasst und aus diesen der Mittelwert oder der Median gebildet und so das Materialgewicht und/oder das Summengewicht ermittelt. Die Anzahl der erfassten Gewichtswerte hängt von einer vorgegebenen oder erreichbaren Abtastrate ab.

Erfindungsgemäß wird die stabile Betriebsart durch einen Prozessfähigkeitsindex bestimmt. Der Prozessfähigkeitsindex wird mit folgender Formel bestimmt:

$$c_p = \frac{USL - LSL}{6 * \sigma}$$

(Gleichung 3)

Die Variable USL ist ein oberes Spezifikationslimit. Die Variable LSL ist ein unteres Spezifikationslimit und $\sigma$ ist eine Standardabweichung. Die stabile Betriebsart liegt bei einem Prozessfähigkeitsindex $c_p \geq 1.33$ vor. Die Variable USL ist somit ein maximal gemessenes Gewicht und die Variable LSL steht für ein minimal gemessenes Gewicht - von ermittelten Einzelgewichten während eines Durchlaufes oder in einer vorgegebenen Zeitspanne.

Eine weitere zweckmäßige Ausführungsform sieht vor, dass zur Bestimmung der Wiegegenauigkeit das Verfahren nach Anspruch 1 zumindest zweimal unmittelbar nacheinander ausgeführt wird. Durch die unmittelbare Wiederholung der Bestimmung der Wiegegenauigkeit wird nochmals überprüft, ob beim ersten Durchlauf nicht irgendein Fehler aufgetreten ist. Dadurch wird sichergestellt, dass kein Fehlalarm ausgelöst wird oder es wird eine zuvor nicht erkannte Abweichung der Wiegegenauigkeit detektiert.

Eine bevorzugte Ausführungsform sieht vor, dass die Wiegegenauigkeit automatisch nach fix vorgegebenen Intervallen ausgeführt wird. Da das zuvor beschriebene Verfahren während des laufenden Betriebes ausgeführt werden kann ist es auch zweckmäßig die Überprüfung der Wiegegenauigkeit in fix vorgegebenen Intervallen von einige Stunden durchzuführen. Dadurch ist gewährleistet, dass eine Fehlfunktion der Dosierbandwaage frühzeitig erkannt wird und entsprechend eine Fehlerhafte Produktion in nachfolgenden Prozessen zu verringern oder möglichst zu vermeiden.

Ein weitere vorteilhafte Ausführungsform sieht vor, dass ein Alarm ausgegeben wird, wenn die Wiegegenauigkeit außerhalb eines zulässigen Bereiches liegt. Sobald die Wiegegenauigkeit nicht mehr gegeben ist, soll unmittelbar ein Alarm ausgegeben werden. Das Instandhaltungspersonal kann dann beispielsweise unmittelbar Wartungsmaßnahmen einleiten oder die Dosierbandwaage durch eine andere ersetzten.

Die Aufgabe wird auch mit der eingangs beschriebenen Vorrichtung gelöst, welche eine Vorrichtung zur Aufbringung eines Prüfgewichtes und eine Auswerteeinrichtung zur Durchführung des zuvor beschriebenen Verfahrens aufweist.

Die Aufgabe wird weiterhin gelöst durch ein Computerprogramm umfassend Befehle, die bewirken, dass die zuvor beschriebene Vorrichtung die oben erläuterten Verfahrensschritte ausführt.

Die Aufgabe wird auch durch ein Computerlesbares Medium, auf dem das Computerprogramm gespeichert ist, gelöst.

Kurze Beschreibung der Zeichnungen

Fig. 1 zeigt einen Ablauf eines Prüfvorgangs einer Dosierbandwaage nach dem Stand der Technik
Fig. 2 zeigt eine Dosierbandwaage
Fig. 3a und 3b zeigt eine Dosierbandwaage mit einer Vorrichtung zum Aufbringen eines Prüfgewichts
Fig. 4 zeigt schematisch eine erfindungsgemäße Ausführungsform

Beschreibung der Ausführungsformen

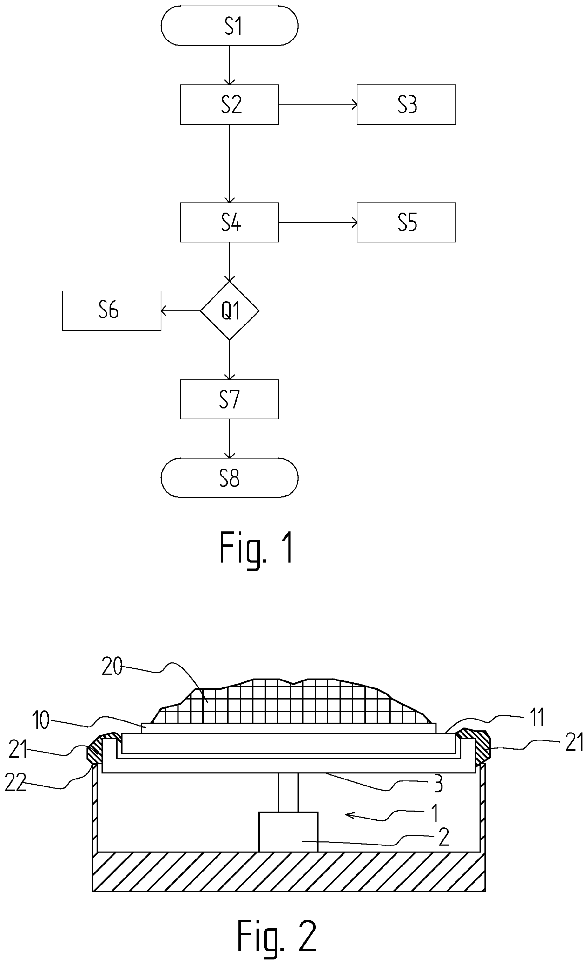

In der Fig. 1 ist ein Ablauf eines Prüfvorganges einer Dosierbandwaage - wie er ohne das erfinderische Verfahren durchgeführt wird - als Ablaufdiagramm dargestellt. Der Prüfvorgang wird im Schritt S1 gestartet. Im Schritt S2 wird die Dosierbandwaage aus der Produktion genommen. Hierfür wird der Schritt S3 ausgeführt, welcher aus einem Abschieben des Materialstromes, einem Leerfahren des Förderbandes und einem Säubern besteht. Wenn der Schritt S3 vollständig ausgeführt wurde, kann mit dem Schritt S4 der Durchführung der Prüfung begonnen werden. Hierfür werden im Schritt S5 folgende Abläufe durchgeführt:

- Ermittlung eines Fördergurtgewichtes mit zumindest 2 Durchläufen.
- Tarieren des Fördergurtgewichtes.
- Aufbringen eines definierten Prüfgewichts auf eine Lagerung einer Wiegezelle.
- In mehreren Durchläufen wird das Prüfgewicht gemessen und verifiziert.
- Abnehmen des Prüfgewichtes.

Nach Abschluss des Schrittes S5 wird in der Abfrage Q1 ermittelt, ob die Dosierbandwaage in einem zulässigen Bereich arbeitet. Sofern dies festgestellt wird kann im Schritt S7 auf den Normalbetrieb umgeschaltet werden und im Schritt S8 wird der Normalbetrieb freigeben. Wenn in der Abfrage Q1 festgestellt wird, dass die Dosierbandwaage außerhalb eines zulässigen Bereichs arbeitet, dann wird im Schritt S6 die Dosierbandwaage nochmals auf mögliche Fehler, wie beispielsweise Anbackungen oder sonstige Blockierungen, untersucht und die Schritte S4 und S5 werden wiederholt. Das Problem ist, dass der Zeitbedarf für einen Prüfvorgang einer Dosierbandwaage mit ca. 15 Minuten bis 60 Minuten beträchtlich ist. Die Dosierbandwaage steht in diesem Zeitraum auch nicht für die Produktion zur Verfügung.

In Fig. 2 ist ein Waage 1 dargestellt. Diese besteht aus einer Wiegezelle 2 und einem statischen Teil der Lasteinleitung 3. Die Förderbandrolle 11 ist mit dem statischen Teil der Lasteinleitung 3 verbunden, wobei auf der Förderbandrolle 11 ein Fördergurt 10 angeordnet ist, welcher das Schüttgut 20 bewegt. Wenn verklemmtes Material 21, Materialanbackungen am Fördergurt 10

7        **EP 4 047 329 B1**        8

und/oder Verschmutzungen an der Waage 1 auftreten, wodurch der Kraftfluss auf die Wiegezelle 2 beeinflusst wird, kommt es zu fehlerhaften Messungen der Wiegezelle. Durch verklemmtes Material 21 kann es dazu kommen, dass nicht der gesamte Kraftfluss auf die Wiegezelle abgeleitet wird, sondern ein Teil beispielsweise auch in Abdeckteile 22 der Waage 1. Es ist also das Ziel solche Störungen möglichst frühzeitig, also im laufenden Betrieb zu erkennen, um Beeinträchtigung der Produktqualität frühest möglich zu erkennen.

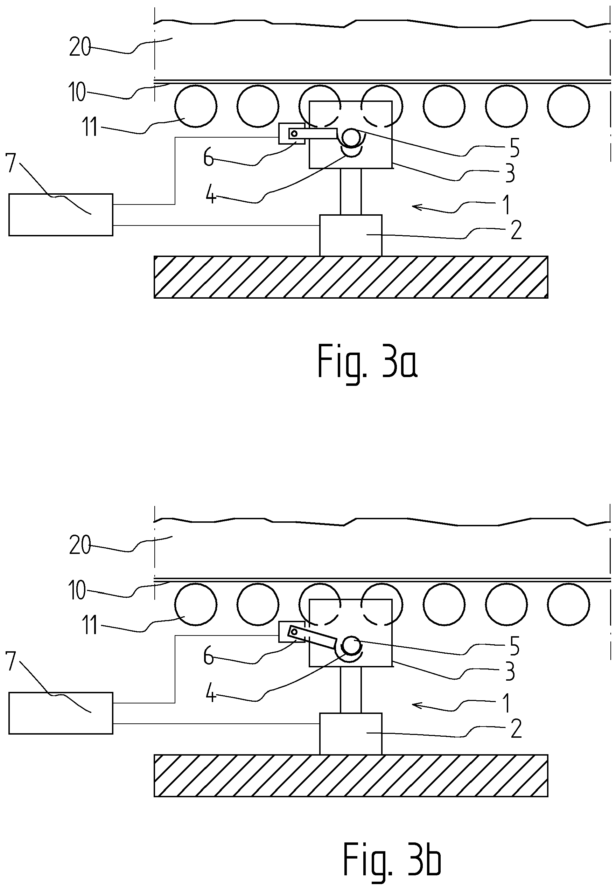

In der Fig. 3a ist ebenfalls eine Waage 1 mit einer Vorrichtung zum Aufbringen eines Prüfgewichts 6 dargestellt. Das Schüttgut 20 wird auf dem Fördergurt 10 transportiert, wobei der Fördergurt 10 von den Förderbandrollen 11 gestützt wird. Die Waage 1 verfügt über eine Wiegezelle 2, welche mit einer Auswerteeinheit 7 verbunden ist. Die Auswerteeinheit 7 kann während des laufenden Betriebes der Waage 1 einen stabilen Betrieb - mit zulässigen Schwankungen, welche in einem vorgegebenen Bereich liegen - erkennen. Bei Vorliegen eines stabilen Betriebes gibt die Auswerteeinrichtung 7 ein Signal an die Vorrichtung zum Aufbringen eines Prüfgewichts 6 und ein Prüfgewicht 5 wird - wie in Fig. 3b gezeigt - auf eine Halterung 4, welche sich vorzugsweise auf dem statischen Teil der Lasteinleitung 3 befindet, aufgelegt.

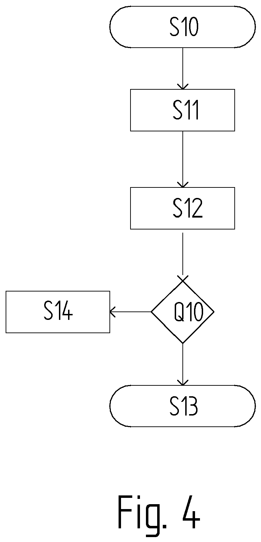

In der Fig. 4 ist der Ablauf einer erfindungsgemäßen Ausführungsform des Verfahrens schematisch dargestellt. Im Schritt S10 wird das Verfahren zur Überprüfung einer Wiegegenauigkeit gestartet. Im Schritt S11 wird eine stabile Betriebsart abgewartet. Sobald eine stabile Betriebsart erreicht wurde, wird das Materialgewicht erfasst und abgespeichert. Im nächsten Schritt S12 wird ein bekanntes Prüfgewicht aufgelegt und ein Summengewicht - welches sich aus Materialgewicht und Prüfgewicht ergibt - bestimmt und abgespeichert. In der Abfrage Q10 wird bestimmt, ob das abgespeicherte Summengewicht abzüglich des abgespeicherten Materialgewichts mit dem aufgelegten Prüfgewicht übereinstimmt. Wenn das berechnete Prüfgewicht mit dem aufgelegten bekannten Prüfgewicht übereinstimmt, kann der Betrieb im Schritt S13 fortgesetzt werden. Wenn keine Übereinstimmung vorliegt wird ein Alarm im Schritt S14 ausgegeben oder es ist denkbar, dass der Prüfvorgang wiederholt wird.

Bezugszeichenliste

| | |
|---|---|
| 1 | Waage |
| 2 | Wiegezelle |
| 3 | Statistischer Teil Lasteinleitung |
| 4 | Halterung |
| 5 | Prüfgewicht |
| 6 | Vorrichtung zum Aufbringen eines Prüfgewichts |
| 7 | Auswerteeinheit |
| 10 | Fördergurt |
| 11 | Förderbandrolle |
| 20 | Schüttgut |
| 21 | Verklemmtes Material |
| 22 | Abdeckteile |
| S1-S8 | Schritt |
| S10-S14 | Schritt |
| Q1, Q10 | Abfrage |

## Patentansprüche

1. Verfahren zur Überprüfung einer Wiegegenauigkeit einer Waage (1), welche innerhalb einer Förderstrecke angeordnet ist, während eines laufenden Betriebes, wobei die Waage (1) im laufenden Betriebes ein Gewicht während eines kontinuierlichen Materialflusses bestimmt, bevorzugt ist die Waage (1) eine Bandwaage oder eine Dosierbandwaage, wobei

   - eine stabile Betriebsart mittels einer Auswerteeinheit (7) erkannt wird,
   - bei Erreichen einer stabilen Betriebsart wird durch die Auswerteeinheit (7) ein Materialgewicht bestimmt,
   - wobei im Anschluss ein bekanntes Prüfgewicht (5) auf die Waage (1) aufgebracht wird,
   - die Auswerteeinheit (7) bestimmt ein Summengewicht, aus Prüfgewicht (7) und Materialgewicht,
   - wobei die Auswerteeinheit (7) aus dem Summengewicht und dem Materialgewicht bestimmt, ob die Wiegegenauigkeit der Waage (1) in einem zulässigen Bereich liegt, **dadurch gekennzeichnet, dass** die stabile Betriebsart durch einen Prozessfähigkeitsindex bestimmt wird, wobei der Prozessfähigkeitsindex mit folgender Formel bestimmt wird:

   $$c_p = (USL - LSL) / (6 * \sigma)$$

   wobei USL ein oberes Spezifikationslimit darstellt, LSL ein unteres Spezifikationslimit darstellt und $\sigma$ ist eine Standardabweichung, die stabile Betriebsart liegt bei einem Prozessfähigkeitsindex $c_p \geq 1.33$ vor.

2. Verfahren zur Überprüfung einer Wiegegenauigkeit einer Waage (1) während des laufenden Betriebes nach Anspruch 1, **dadurch gekennzeichnet, dass** an ein nachgelagertes Produktionssystem, während des laufenden Betriebes, immer nur das Materialgewicht übermittelt wird.

3. Verfahren zur Überprüfung einer Wiegegenauigkeit einer Waage (1) während des laufenden Betriebes nach Anspruch 1 oder 2, **dadurch gekennzeichnet,**

5

**dass** das Prüfgewicht (5) auf einen statischen Teil der Lasteinleitung (3) der Waage (1) aufgebracht wird.

4. Verfahren zur Überprüfung einer Wiegegenauigkeit einer Waage (1) während des laufenden Betriebes nach Anspruch 1, 2 oder 3, **dadurch gekennzeichnet, dass** die stabile Betriebsart dann vorliegt, wenn sich in einer Zeitspanne von zumindest 10 Sekunden, bevorzugt zumindest 20 Sekunden, besonders bevorzugt zumindest 30 Sekunden, das Materialgewicht nur innerhalb eines vorgegebenen Toleranzbereiches verändert.

5. Verfahren zur Überprüfung einer Wiegegenauigkeit einer Waage (1) während des laufenden Betriebes nach den Ansprüchen 1 - 4, **dadurch gekennzeichnet, dass** das Summengewicht und das Materialgewicht aus einem Median oder einem Mittelwert von ermittelten Einzelgewichten während einer jeweils vorgegebenen Zeitspanne ermittelt wird.

6. Verfahren zur Überprüfung einer Wiegegenauigkeit einer Waage (1) während des laufenden Betriebes nach den Ansprüchen 1 - 5, **dadurch gekennzeichnet, dass** zur Bestimmung der Wiegegenauigkeit das Verfahren nach Anspruch 1 zumindest zweimal unmittelbar nacheinander ausgeführt wird.

7. Verfahren zur Überprüfung einer Wiegegenauigkeit einer Waage (1) während des laufenden Betriebes nach den Ansprüchen 1 - 6, **dadurch gekennzeichnet, dass** die Wiegegenauigkeit automatisch nach fix vorgegebenen Intervallen ausgeführt wird.

8. Verfahren zur Überprüfung einer Wiegegenauigkeit einer Waage (1) während des laufenden Betriebes nach den Ansprüchen 1 - 7, **dadurch gekennzeichnet, dass** ein Alarm ausgegeben wird, wenn die Wiegegenauigkeit außerhalb eines zulässigen Bereiches liegt.

9. Vorrichtung zur Überprüfung einer Wiegegenauigkeit einer Waage (1), welche innerhalb einer Förderstrecke angeordnet ist, während des laufenden Betriebes, wobei die Waage ein Gewicht während eines kontinuierlichen Materialflusses bestimmt, bevorzugt ist die Waage eine Bandwaage oder eine Dosierbandwaage, umfassend:

- eine Vorrichtung zur Aufbringung eines Prüfgewichtes (6) und
- eine Auswerteeinrichtung (7) zur Durchführung des Verfahrens nach den Ansprüchen 1-8.

10. Computerprogramm umfassend Befehle, die bewirken, dass Vorrichtung zur Überprüfung einer Wiegegenauigkeit einer Waage (1) während des laufenden Betriebes nach Anspruch 9 die Verfahrensschritte nach den Ansprüchen 1 - 8 ausführen.

11. Computerlesbares Medium, auf dem das Computerprogramm nach Anspruch 10 gespeichert ist.

## Claims

1. Method for checking the weighing accuracy of a scale (1), which is arranged within a conveyor track, during ongoing operation, wherein the scale (1) determines a weight during a continuous material flow during ongoing operation, the scale (1) preferably being a belt scale or a weighfeeder, wherein

- a stable mode of operation is identified by means of an evaluation unit (7),
- a material weight is determined by the evaluation unit (7) when a stable mode of operation is achieved,
- wherein subsequently a known test weight (5) is placed onto the scale (1),
- the evaluation unit (7) determines a total weight, made up of the test weight (7) and the material weight,
- wherein the evaluation unit (7) determines from the total weight and the material weight whether the weighing accuracy of the scale (1) is in a permissible range, **characterized in that** the stable mode of operation is determined by a processability index, wherein the processability index is determined using the following formula:

$$c_p = (USL - LSL)/(6 * \sigma)$$

where USL represents an upper specification limit, LSL represents a lower specification limit and $\sigma$ is a standard deviation, the stable manner of operation being present at a processability index $c_p \geq 1.33$.

2. Method for checking the weighing accuracy of a scale (1) during ongoing operation according to Claim 1, **characterized in that** always only the material weight is transmitted to a downstream production system during ongoing operation.

3. Method for checking the weighing accuracy of a scale (1) during ongoing operation according to Claim 1 or 2, **characterized in that** the test weight (5) is placed onto a static part of the load introduction arrangement (3) of the scale (1).

4. Method for checking the weighing accuracy of a scale (1) during ongoing operation according to Claim 1, 2 or 3, **characterized in that** the stable mode of operation is present when the material weight changes only within a specified tolerance range in a time period of at least 10 seconds, preferably at least 20 seconds, particularly preferably at least 30 seconds.

5. Method for checking the weighing accuracy of a scale (1) during ongoing operation according to Claims 1-4, **characterized in that** the total weight and the material weight are ascertained from a median or a mean value of ascertained individual weights during a respectively specified time period.

6. Method for checking the weighing accuracy of a scale (1) during ongoing operation according to Claims 1-5, **characterized in that** the method according to Claim 1 is executed at least twice immediately in succession for determining the weighing accuracy.

7. Method for checking the weighing accuracy of a scale (1) during ongoing operation according to Claims 1-6, **characterized in that** the weighing accuracy is automatically executed in accordance with fixedly specified intervals.

8. Method for checking the weighing accuracy of a scale (1) during ongoing operation according to Claims 1-7, **characterized in that** an alarm is output if the weighing accuracy is outside a permissible range.

9. Device for checking the weighing accuracy of a scale (1), which is arranged within a conveyor track, during ongoing operation, wherein the scale determines a weight during a continuous material flow, the scale preferably being a belt scale or a weighfeeder, comprising:

   - a device for placing a test weight (6) and
   - an evaluation device (7) for carrying out the method according to Claims 1-8.

10. Computer program comprising instructions which prompt the device for checking the weighing accuracy of a scale (1) during ongoing operation according to Claim 9 to execute the method steps according to Claims 1-8.

11. Computer-readable medium on which the computer program according to Claim 10 is stored.

## Revendications

1. Procédé de vérification de la précision de pesée d'une balance (1), qui est intégrée dans une section de transport, lors du fonctionnement, dans lequel la balance (1) détermine un poids pendant un flux continu de matière, la balance (1) est de préférence une bande transporteuse peseuse ou une bande transporteuse peseuse avec dispositif de dosage, dans lequel

   - un mode de fonctionnement stable est détecté au moyen d'une unité d'évaluation (7),
   - lorsqu'un mode de fonctionnement stable est atteint, l'unité d'évaluation (7) détermine un poids de matériau,
   - un poids d'essai (5) connu est ensuite appliqué sur la balance (1),
   - l'unité d'évaluation (7) détermine un poids total, à partir du poids d'essai (5) et du poids du matériau,
   - à partir du poids total et du poids du matériau, l'unité d'évaluation (7) détermine si la précision de pesée de la balance (1) se situe dans une plage autorisée, **caractérisé en ce que** le mode de fonctionnement stable est déterminé par un indice de capacité de traitement, dans lequel l'indice de capacité de traitement est déterminé par la formule suivante :

$$c_p = (USL - LSL) / (6 * \sigma)$$

dans laquelle USL représente une limite de spécification supérieure, LSL représente une limite de spécification inférieure et $\sigma$ est un écart-type, le mode de fonctionnement stable se situe à un indice de capacité de traitement $c_p \geq 1,33$.

2. Procédé de vérification de la précision de pesée d'une balance (1) lors du fonctionnement selon la revendication 1, **caractérisé en ce que** toujours seul le poids du matériau est transmis à un système de production en aval, lors du fonctionnement.

3. Procédé de vérification de la précision de pesée d'une balance (1) lors du fonctionnement selon la revendication 1 ou 2, **caractérisé en ce que** le poids d'essai (5) est appliqué sur une partie statique de l'entrée de charge (3) de la balance (1).

4. Procédé de vérification de la précision de pesée d'une balance (1) lors du fonctionnement selon la revendication 1, 2 ou 3, **caractérisé en ce que** le mode de fonctionnement stable est présent lorsque, dans un intervalle de temps d'au moins 10 secondes, de préférence d'au moins 20 secondes, particulièrement de préférence d'au moins 30 secondes, le poids du matériau ne varie que dans une plage de tolérance prédéfinie.

5. Procédé de vérification de la précision de pesée d'une balance (1) lors du fonctionnement selon les revendications 1 à 4, **caractérisé en ce que** le poids total et le poids du matériau sont déterminés à partir d'une médiane ou d'une valeur moyenne de poids individuels déterminés pendant un intervalle de temps respectivement prédéfini.

6.  Procédé de vérification de la précision de pesée d'une balance (1) lors du fonctionnement selon les revendications 1 à 5, **caractérisé en ce que**, pour déterminer la précision de la position, le procédé selon la revendication 1 est exécuté au moins deux fois immédiatement l'une après l'autre.

7.  Procédé de vérification de la précision de pesée d'une balance (1) lors du fonctionnement selon les revendications 1 à 6, **caractérisé en ce que** la précision de la pesée est effectuée automatiquement selon des intervalles prédéfinis.

8.  Procédé de vérification de la précision de pesée d'une balance (1) lors du fonctionnement selon les revendications 1 à 7, **caractérisé en ce qu'**une alarme est émise lorsque la précision de la mesure se situe en dehors d'une plage autorisée.

9.  Dispositif de vérification de la précision de pesée d'une balance (1), qui est intégrée dans une section de transport, lors du fonctionnement, dans lequel la balance détermine un poids pendant un flux continu de matière, la balance est de préférence une bande transporteuse peseuse ou une bande transporteuse peseuse avec dispositif de dosage, comprenant :

    - un dispositif d'application d'un poids d'essai (6) et
    - un dispositif d'évaluation (7) pour la mise en œuvre du procédé selon les revendications 1 à 8.

10. Programme informatique comprenant des instructions qui amènent le dispositif de vérification de la précision de pesée d'une balance (1) lors du fonctionnement selon la revendication 9 à exécuter les étapes de procédé selon les revendications 1 à 8.

11. Support lisible par ordinateur sur lequel est enregistré le programme informatique selon la revendication 10.

Fig. 1

Fig. 2

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012017717 A1